# EUROPÄISCHE PATENTSCHRIFT

(11) **EP 2 944 925 B1**
(45) Veröffentlichungstag und Bekanntmachung des Hinweises auf die Patenterteilung: **28.12.2016**
(21) Anmeldenummer: 15154500.1
(22) Anmeldetag: 10.02.2015
(51) Int. Cl.: G01D 5/245

(54) **Inkrementale Positionsmesseinrichtung mit auswählbaren Referenzmarken**
Incremental encoder with selectable reference marks
Encodeur incrémentiel avec points de repère sélectionnables

(30) Priorität: 13.05.2014 DE 102014209004
(43) Veröffentlichungstag der Anmeldung: 18.11.2015
(73) Patentinhaber: Dr. Johannes Heidenhain GmbH, 83301 Traunreut (DE)
(72) Erfinder: Schlichtner, Ludwig, 5122 Hochburg-Ach (AT)

(56) Entgegenhaltungen:
- DE-A1- 10 123 539
- US-B2- 7 421 800

## Beschreibung

### GEBIET DER TECHNIK

Die vorliegende Erfindung betrifft eine Positionsmesseinrichtung nach dem Oberbegriff des Anspruchs 1.

### STAND DER TECHNIK

Derartige Positionsmesseinrichtungen werden insbesondere in Bearbeitungsmaschinen zur Messung der Relativlage eines Werkzeugs bezüglich eines zu bearbeitenden Werkstücks, in Koordinatenmessmaschinen zur Ermittlung von Lage und Abmessungen von Prüfobjekten sowie auch in der Halbleiterindustrie, beispielsweise in Wafersteppern sowie Bondern eingesetzt. Dabei wird der Maßstab an der Antriebseinheit (z. B. Linearmotor) direkt angebaut oder der Maßstab an einem durch die Antriebseinheit angetriebenen Bauteil angebaut. Stationär gegenüber dem bewegten Maßstab ist die Abtasteinheit der Positionsmesseinrichtung an einem anderen Maschinenteil angeordnet, dessen Position gemessen werden soll.

Eine derartige Positionsmesseinrichtung ist beispielsweise aus der US 7,421,800 B2 bekannt. Der Maßstab weist eine inkrementale Messteilung zur Erzeugung von periodischen Messsignalen sowie mehrere in Messrichtung voneinander beabstandete Referenzmarken zur Erzeugung von Referenmarkensignalen auf. Ein Referenzmarkensignal hat die Funktion für die Position der Referenzmarke einen Absolutbezug der inkrementalen Positionsmessung herzustellen, indem an dieser Position ein Zähler auf einen vorgegebenen Zählerstand gesetzt wird. Um dem Anwender diese Position auswählbar zu gestalten, kann er eine aus den mehreren Referenzmarken auswählen. Zur Auswahl ist der gewünschten Referenzmarke in einer Markierungsspur des Maßstabs eine erste Markierung zugeordnet, die bei Abtastung ein Auswahlsignal generiert. In dieser Markierungsspur ist darüber hinaus eine zweite Markierung angeordnet, aus der durch Abtastung ein Schaltsignal erzeugbar ist, welches eine Grenzlage definiert.

Zur Unterscheidung der zwei an unterschiedlichen Positionen in der Markierungsspur angeordneten Markierungen ist am Ort der zweiten Markierung in einer weiteren Markierungsspur eine weitere Markierung angeordnet. Um die Sicherheit der Unterscheidung zu erhöhen, wird vorgeschlagen, die zweite Markierung länger auszugestalten als die in der weiteren Markierungsspur angeordnete weitere Markierung.

### ZUSAMMENFASSUNG DER ERFINDUNG

Der vorliegenden Erfindung liegt die Aufgabe zugrunde, bei einer derartigen Positionsmesseinrichtung die Sicherheit der Unterscheidung der Markierungen und somit der diese definierenden Positionen weiter zu erhöhen.

Diese Aufgabe wird erfindungsgemäß durch eine Positionsmesseinrichtung mit den Merkmalen des Anspruchs 1 gelöst.

Diese Positionsmesseinrichtung umfasst einen Maßstab und eine relativ dazu in Messrichtung bewegliche Abtasteinheit. Der Maßstab weist eine inkrementale Messteilung sowie mehrere in Messrichtung voneinander beabstandete Referenzmarken auf. Durch Abtastung der Messteilung sind periodische Messsignale erzeugbar und durch Abtastung der Referenzmarken ist jeweils ein Referenzmarkensignal erzeugbar. Weiterhin weist der Maßstab eine Markierungsspur auf, mit einer ersten Markierung, wobei die erste Markierung einer der Referenzmarken zugeordnet ist. Durch Abtastung dieser ersten Markierung ist ein Abtastsignal generierbar, das die Funktion eines Auswahlsignals der Referenzmarke hat, welcher die erste Markierung zugeordnet ist.

In der Markierungsspur in Messrichtung beabstandet zur ersten Markierung ist eine zweite Markierung angeordnet, die in Messrichtung länger ist als die erste Markierung und durch Abtastung dieser zweiten Markierung ist ein Schaltsignal generierbar.

Die Abtasteinheit weist zur Abtastung der Markierungsspur einen ersten Detektor und einen in Messrichtung dazu beabstandet angeordneten zweiten Detektor auf, wobei der gegenseitige Abstand der beiden Detektoren größer ist als die Länge der ersten Markierung und kleiner ist als die Länge der zweiten Markierung. Die Detektoren generieren jeweils bei Abtastung einer der Markierungen ein Abtastsignal.

Die Abtasteinheit ist dazu ausgebildet das Schaltsignal zu generieren, wenn der erste Detektor sowie der zweite Detektor gemeinsam ein Abtastsignal generieren. Die Abtasteinheit ist weiter dazu ausgebildet einen Referenzimpuls zu erzeugen, wenn ausschließlich der erste Detektor der beiden Detektoren ein Abtastsignal generiert.

Die Formulierung, dass eine Referenzmarke auswählbar ist, bedeutet nicht zwingend, dass gemäß der Erfindung nur eine einzige ausgewählt wird. So kann es auch sinnvolle Anwendungen für die Erfindung geben, bei der mehrere Referenzmarken ausgewählt werden, indem diesen mehreren Referenzmarken jeweils eine erste Markierung zugeordnet wird.

Vorteilhafte Ausführungen der erfindungsgemäßen Positionsmesseinrichtung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: eine schematische Darstellung eines ersten Ausführungsbeispiels der erfindungsgemäßen Positionsmesseinrichtung;
- Figur 2: eine Auswerteschaltung der Positionsmesseinrichtung aus Figur 1;
- Figur 3: eine schematische Darstellung eines zweiten Ausführungsbeispiels der erfindungsgemäßen Positionsmesseinrichtung, und
- Figur 4: eine Auswerteschaltung der Positionsmesseinrichtung aus Figur 3.

### BESCHREIBUNG DER AUSFÜHRUNGSFORMEN

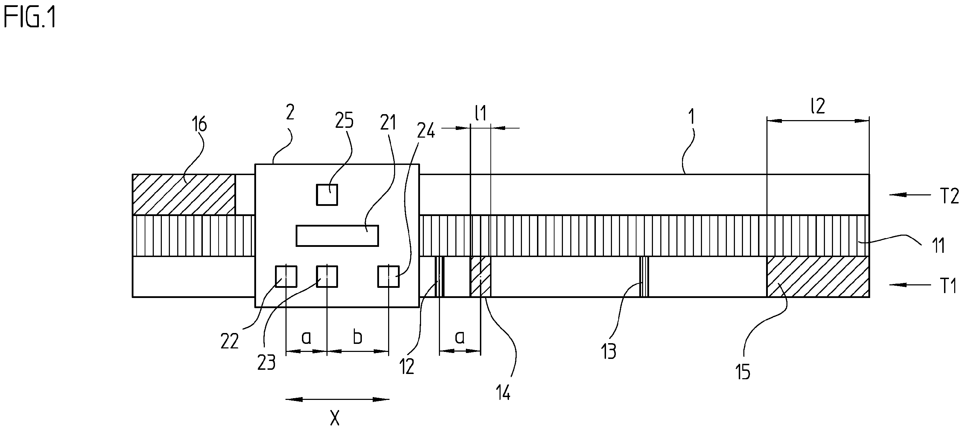

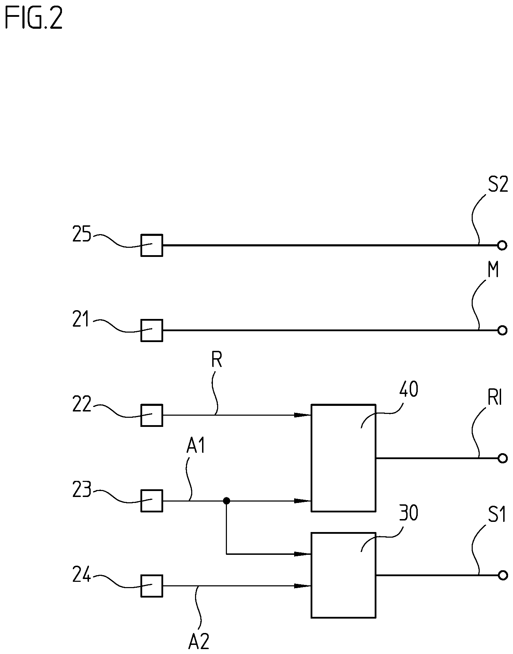

Ein erstes Ausführungsbeispiel der erfindungsgemäßen Positionsmesseinrichtung ist in den Figuren 1 und 2 schematisch dargestellt und wird nachfolgend im Detail erläutert.

Die Positionsmesseinrichtung umfasst einen Maßstab 1 und eine relativ dazu in Messrichtung X bewegliche Abtasteinheit 2. Der Maßstab 1 trägt eine inkrementale Messteilung 11, die von einer Detektoreinheit 21 der Abtasteinheit 2 abtastbar ist. Bei der Abtastung der Messteilung 11 erzeugt die Detektoreinheit 21 in bekannter Weise elektrische periodische Messsignale M, mit denen eine relative Positionsmessung ermöglicht wird.

Der Maßstab 1 weist weiterhin mehrere in Messrichtung X voneinander beabstandete Referenzmarken 12, 13 auf. Zur Abtastung der Referenzmarken 12, 13 ist in der Abtasteinheit 2 ein Referenzmarkendetektor 22 vorgesehen. Bei Abtastung der Referenzmarken 12, 13 mit dem Referenzmarkendetektor 22 wird jeweils ein Referenzmarkensignal R erzeugt.

Aus den mehreren Referenzmarken 12, 13 kann eine ausgewählt werden. Zur Auswahl einer der Referenzmarken 12, 13 ist am Maßstab 1 eine Markierungsspur T1 vorgesehen. In dieser Markierungsspur T1 ist der ausgewählten Referenzmarke 12 eine erste Markierung 14 zugeordnet. Zur Abtastung der ersten Markierung 14 ist in der Abtasteinheit 2 ein erster Detektor 23 angeordnet. Bei Abtastung dieser ersten Markierung 14 mittels des ersten Detektors 23 wird ein Auswahlsignal in Form eines ersten Abtastsignals A1 erzeugt. Treten in der Abtasteinheit 2 das Referenzmarkensignal R und das erste Abtastsignal A1 gleichzeitig auf, wird ein Referenzmarkenimpuls RI erzeugt, welcher dieser Position eine absolute Position zuordnet. Dies kann beispielsweise dadurch erfolgen, indem ein Zähler der inkrementalen Positionsmessung auf einen vorgegebenen Wert gesetzt wird. Das Prinzip der Logik zur Erzeugung eines Referenzmarkenimpulses RI an der Position der durch die erste Markierung 14 ausgewählten Referenzmarke 12 ist in Figur 2 schematisch durch den Baustein 40 der Abtasteinheit 2 dargestellt.

Die erste Markierung 14 ist insbesondere eine vom Anwender der Positionsmesseinrichtung auf den Maßstab 1 aufbringbare Markierung, beispielsweise anbringbar durch Aufkleben oder durch Anschrauben. Arbeitet die Positionsmesseinrichtung nach dem lichtelektrischen Abtastprinzip, ist die erste Markierung 14 vorzugsweise ein opaker bzw. nichtreflektierender Streifen, wobei der übrige Bereich der Markierungsspur T1 komplementär dazu ausgebildet ist, also transparent bzw. reflektierend.

Um das gleichzeitige Erzeugen des Referenzmarkensignals R und des ersten Abtastsignals A1 zu gewährleisten, ist die erste Markierung 14 in einem Abstand a zur Referenzmarke 12 angebracht, wobei dieser Abstand a dem gegenseitigen Abstand a des Referenzmarkendetektors 22 und des ersten Detektors 23 entspricht (Abstände a und b jeweils in Messrichtung X betrachtet).

In nicht dargestellter Weise können die Referenzmarken 12, 13 auch in der Messteilung 11 integriert sein, wie an sich bekannt und beispielsweise in der eingangs genannten US 7,421, 800 B2 dargestellt. In diesem Fall kann der Abstand a gleich Null gewählt werden.

In vielen Fällen wird bei der Positionsmessung zusätzlich gefordert, dass an einem vorgegebenen Bereich des Maßstabs 1 ein möglichst sicheres Schaltsignal ausgegeben wird. Dieses Schaltsignal kann beispielsweise dazu genutzt werden, um eindeutig zu erkennen, ob sich die Abtasteinheit 2 an einer Endlage des Maßstabs befindet oder ob sich die Abtasteinheit auf der rechten oder auf der linken Seite einer Referenzmarke befindet.

Bei dem ersten Ausführungsbeispiel soll ein Schaltsignal S1 generiert werden, welches eine Endlage des Maßstabs 1 anzeigt. Um mit der Abtasteinheit 2 durch Abtastung des Maßstabs 1 ein derartiges Schaltsignal S1 erzeugen zu können, ist in der Markierungsspur T1 in Messrichtung X beabstandet zur ersten Markierung 14 eine zweite Markierung 15 angeordnet ist. Diese zweite Markierung 15 weist in Messrichtung X eine Länge l2 auf, wobei l2 größer als die Länge l1 der ersten Markierung 14 ist.

Zur Abtastung der Markierungsspur T1 weist die Abtasteinheit 2 den ersten Detektor 23 und einen in Messrichtung X dazu beabstandet angeordneten zweiten Detektor 24 auf, wobei der gegenseitige Abstand b der beiden Detektoren 23 und 24 größer ist als die Länge l1 der ersten Markierung 14 und kleiner ist als die Länge l2 der zweiten Markierung 15. Da die Markierungsspur T1 vom ersten Detektor 23 sowie vom zweiten Detektor 24 abgetastet wird erzeugt der erste Detektor 23 bei Abtastung der ersten Markierung 14 und bei Abtastung der zweiten Markierung 15 jeweils ein Abtastsignal A1 sowie der zweite Detektor 24 bei Abtastung der ersten Markierung 14 und bei Abtastung der zweiten Markierung 15 jeweils ein Abtastsignal A2.

Die Abtasteinheit 2 ist dazu ausgebildet das Schaltsignal S1 zu generieren, wenn der erste Detektor 23 das erste Abtastsignal A1 sowie der zweite Detektor 24 das zweite Abtastsignal A2 gleichzeitig generieren. In Figur 2 ist zur Erzeugung des Schaltsignals S1 schematisch eine Auswerteeinheit 30 dargestellt. Indem die zweite Markierung 15 länger ist als der gegenseitige Abstand b des ersten Detektors 23 und des zweiten Detektors 24 sowie die erste Markierung 14 kürzer ist als dieser Abstand b, ist gewährleistet, dass das Schaltsignal S1 ausschließlich an der zweiten Markierung 15 erzeugt wird. Um weiter zu gewährleisten, dass das Schaltsignal S1 nicht bei der Abtastung der ersten Markierung 14 sowie der Referenzmarke 12 erzeugt wird, weicht der gegenseitige Abstand b des ersten Detektors 23 und des zweiten Detektors 24 vom gegenseitigen Abstand a der Referenzmarke 12 und der ersten Markierung 14 ab.

Vorteilhaft ist es, wenn der erste Detektor 23 sich auf der Seite der beiden Detektoren 23 und 24 befindet, auf der auch die erste Markierung 14 gegenüber der zweiten Markierung 15 in der Markierungsspur T1 angeordnet ist. Dadurch ist gewährleistet, dass beim Einfahren der Abtasteinheit 2 in die zweite Markierung 15 immer zuerst der zweite Detektor 24 das Abtastsignal A2 generiert, bevor der erste Detektor 23 in die zweite Markierung 15 einfährt. Durch diese Ausgestaltung ist sichergestellt, dass bei Abtastung der zweiten Markierung 15 keinesfalls versehentlich ein Referenzmarkenimpuls RI generiert wird, da auf jeden Fall vorher das zweite Abtastsignal A2 erzeugt wird, welches die Ausgabe eines Referenzmarkenimpulses RI sperrt. Die Abtasteinheit 2 ist also dazu ausgebildet, den Referenzimpuls RI nur dann zu erzeugen, wenn ausschließlich der erste Detektor 23 der beiden Detektoren 23, 24 ein Abtastsignal A1 generiert.

Die zweite Markierung 15 ist im ersten Ausführungsbeispiel in vorteilhafter Weise an einer Grenzlage des Maßstabs 1 angeordnet und das Schaltsignal S1 zeigt diese Grenzlage - hier die rechte Endlage - für den Verfahrweg der Abtasteinheit 2 an.

Der Maßstab 1 des ersten Ausführungsbeispiels weist eine weitere Markierungsspur T2 auf, die wie die erste Markierungsspur T1 neben der Messteilung 11 und parallel dazu in Messrichtung X verläuft. In dieser weiteren Markierungsspur T2 ist eine weitere Markierung 16 angeordnet. Zur Abtastung dieser weiteren Markierungsspur T2 weist die Abtasteinheit 2 einen weiteren Detektor 25 auf. Dieser weitere Detektor 25 generiert bei Abtastung der weiteren Markierung 16 ein weiteres Schaltsignal S2. Im dargestellten Beispiel ist die weitere Markierung 16 an der linken Grenzlage des Maßstabs 1 angeordnet, so dass das weitere Schaltsignal S2 die linke Endlage für die Abtasteinheit 2 anzeigt.

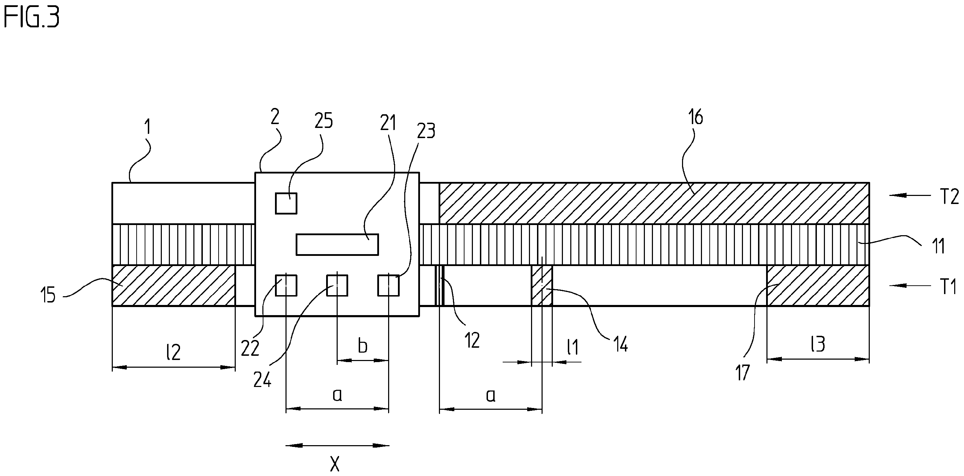

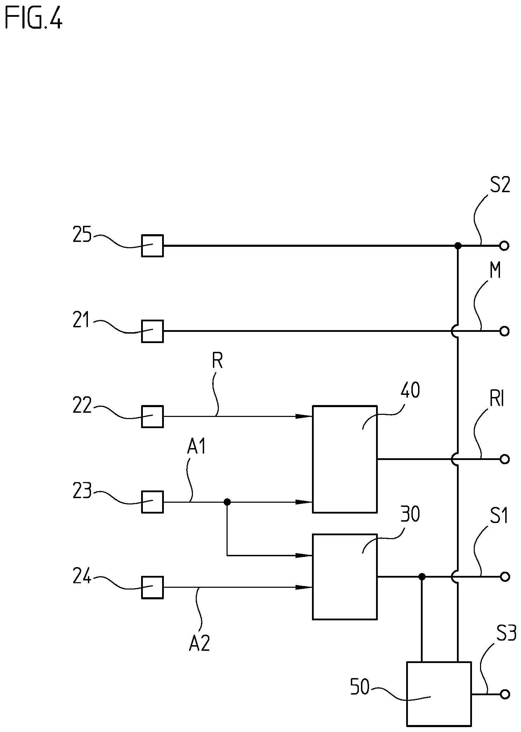

Anhand der Figuren 3 und 4 wird nachfolgend eine weitere erfindungsgemäß ausgestaltete Positionsmesseinrichtung erläutert. Dabei werden gleichwirkende Bauteile mit dem gleichen Bezugszeichen versehen wie bei dem ersten Ausführungsbeispiel.

Diese Positionsmesseinrichtung umfasst wiederum einen Maßstab 1 und eine relativ dazu in Messrichtung X bewegliche Abtasteinheit 2. Der Maßstab 1 trägt eine inkrementale Messteilung 11, die von einer Detektoreinheit 21 der Abtasteinheit 2 abtastbar ist. Bei der Abtastung der Messteilung 11 erzeugt die Detektoreinheit 21 elektrische periodische Messignale M, mit denen eine relative Positionsmessung ermöglicht wird.

Der Maßstab 1 weist weiterhin mehrere in Messrichtung X voneinander beabstandete Referenzmarken 12 auf, von denen hier aus Gründen der Übersichtlichkeit nur eine dargestellt ist. Zur Abtastung der Referenzmarken 12 ist in der Abtasteinheit 2 ein Referenzmarkendetektor 22 vorgesehen. Bei Abtastung der Referenzmarken 12 mit dem Referenzmarkendetektor 22 wird jeweils ein Referenzmarkensignal R erzeugt.

Aus den mehreren Referenzmarken 12 kann eine ausgewählt werden. Zur Auswahl beispielsweise der Referenzmarke 12 ist am Maßstab 1 eine Markierungsspur T1 vorgesehen. In dieser Markierungsspur T1 ist dieser ausgewählten Referenzmarke 12 eine erste Markierung 14 zugeordnet. Zur Abtastung der ersten Markierung 14 ist in der Abtasteinheit 2 ein erster Detektor 23 angeordnet. Bei Abtastung dieser ersten Markierung 14 mittels des ersten Detektors 23 wird ein Auswahlsignal in Form eines ersten Abtastsignals A1 erzeugt. Treten in der Abtasteinheit 2 das Referenzmarkensignal R und das erste Abtastsignal A1 gleichzeitig auf, wird ein Referenzmarkenimpuls RI erzeugt, welcher dieser Position eine absolute Position zuordnet, indem ein Zähler der inkrementalen Positionsmessung auf einen vorgegebenen Wert gesetzt wird. Das Prinzip der Erzeugung eines Referenzmarkenimpulses RI an der Position der durch die erste Markierung 14 ausgewählten Referenzmarke 12 ist in Figur 2 schematisch durch den Baustein 40 der Abtasteinheit 2 dargestellt.

Um an der gewünschten Position das gleichzeitige Erzeugen des Referenzmarkensignals R und des ersten Abtastsignals A1 zu gewährleisten, ist die erste Markierung 14 in einem Abstand a zur Referenzmarke 12 angebracht, wobei dieser Abstand a dem gegenseitigen Abstand a des Referenzmarkendetektors 22 und des ersten Detektors 23 entspricht.

In nicht dargestellter Weise können die Referenzmarken 12 auch in der Messteilung 11 integriert sein, wie an sich bekannt und beispielsweise in der eingangs genannten US 7,421, 800 B2 dargestellt. In diesem Fall kann der Abstand a auch gleich Null gewählt werden.

Um mit der Abtasteinheit 2 durch Abtastung des Maßstabs 1 auch bei diesem Ausführungsbeispiel zusätzlich ein Schaltsignal S1 erzeugen zu können, ist in der Markierungsspur T1 in Messrichtung X beabstandet zur ersten Markierung 14 eine zweite Markierung 15 angeordnet ist. Diese zweite Markierung 15 ist in Messrichtung X länger als die erste Markierung 14.

Zur Abtastung der Markierungsspur T1 weist die Abtasteinheit 2 den ersten Detektor 23 und einen in Messrichtung X dazu beabstandet angeordneten zweiten Detektor 24 auf, wobei der gegenseitige Abstand b der beiden Detektoren 23 und 24 größer ist als die Länge l1 der ersten Markierung 14 und kleiner ist als die Länge l2 der zweiten Markierung 15. Da die Markierungsspur T1 vom ersten Detektor 23 sowie vom zweiten Detektor 24 abgetastet wird erzeugt der erste Detektor 23 bei Abtastung der ersten Markierung 14 und bei Abtastung der zweiten Markierung 15 jeweils ein Abtastsignal A1 sowie der zweite Detektor 24 bei Abtastung der ersten Markierung 14 und bei Abtastung der zweiten Markierung 15 jeweils ein Abtastsignal A2.

Die Abtasteinheit 2 umfasst eine Auswerteeinheit 30, die dazu ausgebildet ist das Schaltsignal S1 zu generieren, wenn der erste Detektor 23 das erste Abtastsignal A1 sowie der zweite Detektor 24 das zweite Abtastsignal A2 gleichzeitig generieren. Indem die zweite Markierung 15 länger ist als der gegenseitige Abstand b des ersten Detektors 23 und des zweiten Detektors 24 sowie die erste Markierung 14 kürzer ist als dieser Abstand b, ist gewährleistet, dass das Schaltsignal S1 ausschließlich an der zweiten Markierung 15 erzeugt wird und nicht an der ersten Markierung 14. Um weiter zu gewährleisten, dass das Schaltsignal S1 nicht bei der Abtastung der ersten Markierung 14 sowie der Referenzmarke 12 erzeugt wird, weicht der gegenseitige Abstand b des ersten Detektors 23 und des zweiten Detektors 24 vom gegenseitigen Abstand a der Referenzmarke 12 und der ersten Markierung 14 ab.

Vorteilhaft ist es, wenn der erste Detektor 23 sich auf der Seite der beiden Detektoren 23 und 24 befindet, auf der auch die erste Markierung 14 gegenüber der zweiten Markierung 15 in der Markierungsspur T1 angeordnet ist. Dadurch ist gewährleistet, dass beim Einfahren der Abtasteinheit 2 in die zweite Markierung 15 immer zuerst der zweite Detektor 24 das Abtastsignal A2 generiert, bevor der erste Detektor 23 in die zweite Markierung 15 einfährt. Durch diese Ausgestaltung ist sichergestellt, dass bei Abtastung der zweiten Markierung 15 keinesfalls versehentlich ein Referenzmarkenimpuls RI generiert wird. Die Abtasteinheit 2 ist also dazu ausgebildet, den Referenzimpuls RI nur dann zu erzeugen, wenn ausschließlich der erste Detektor 23 der beiden Detektoren 23, 24 ein Abtastsignal A1 generiert.

Die zweite Markierung 15 ist in diesem zweiten Ausführungsbeispiel in vorteilhafter Weise wiederum an einer Grenzlage des Maßstabs 1 angeordnet und das Schaltsignal S1 zeigt diese Grenzlage an, wobei es sich hier um die linke Endlage für den Verfahrweg der Abtasteinheit 2 handelt.

Der Maßstab 1 des zweiten Ausführungsbeispiels weist eine weitere Markierungsspur T2 auf, die parallel zur ersten Markierungsspur T1 in Messrichtung X verläuft. In dieser weiteren Markierungsspur T2 ist eine weitere Markierung 16 angeordnet. Zur Abtastung dieser weiteren Markierungsspur T2 weist die Abtasteinheit 2 einen weiteren Detektor 25 auf. Dieser weitere Detektor 25 generiert bei Abtastung der weiteren Markierung 16 ein weiteres Schaltsignal S2. Im dargestellten Beispiel ist die weitere Markierung 16 an der rechten Seite der Referenzmarke 12 angeordnet, so dass das weitere Schaltsignal S2 den Bereich rechts der Referenzmarke 12 anzeigt.

Sollte es zusätzlich erforderlich sein, dass bei dem zweiten Ausführungsbeispiel auch die rechte und die linke Endlage voneinander unterscheidbar sind, kann hierzu auf einfache und sichere Weise eine weitere Information gewonnen werden. Insbesondere wird in der ersten Markierungsspur T1 an der rechten Grenzlage des Maßstabs 1 eine weitere Markierung 17 vorgesehen. Die Länge l3 dieser weiteren Markierung 17 ist in Messrichtung X größer als die Länge l1 der ersten Markierung 14 in dieser Markierungsspur T1. Ein die rechte Endlage definierendes Schaltsignal S3 wird erzeugt, wenn der Detektor 25 ein Abtastsignal S2 erzeugt und gleichzeitig die beiden Detektoren 23 und 24 ein Abtastsignal A1 und A2 erzeugen. Die Logik zur Erzeugung des Schaltsignals S3 ist in Figur 4 schematisch als Baustein 50 dargestellt.

Die Erfindung ist anhand des besonders vorteilhaften lichtelektrischen Abtastprinzips beispielhaft erläutert. Die Erfindung ist aber nicht darauf beschränkt und ist auch bei induktiven, magnetischen oder kapazitiven Abtastprinzipien erfolgreich umsetzbar.

## Patentansprüche

1. Positionsmesseinrichtung mit einem Maßstab (1) und einer relativ dazu in Messrichtung (X) beweglichen Abtasteinheit (2), wobei der Maßstab (1) eine inkrementale Messteilung (11) sowie mehrere in Messrichtung (X) voneinander beabstandete Referenzmarken (12, 13) aufweist, wobei durch Abtastung einer der Referenzmarken (12) ein Referenzmarkenimpuls (RI) erzeugbar ist;
der Maßstab (1) eine Markierungsspur (T1) aufweist, mit einer ersten Markierung (14), wobei die erste Markierung (14) einer der Referenzmarken (12) zugeordnet ist;
in der Markierungsspur (T1) in Messrichtung (X) beabstandet zur ersten Markierung (14) eine zweite Markierung (15, 17) angeordnet ist, die in Messrichtung (X) länger ist als die erste Markierung (14) und durch Abtastung dieser zweiten Markierung (15, 17) ein Schaltsignal (S1) generierbar ist,
**dadurch gekennzeichnet, dass**
die Abtasteinheit (2) zur Abtastung der Markierungsspur (T1) einen ersten Detektor (23) und einen in Messrichtung (X) dazu beabstandet angeordneten zweiten Detektor (24) aufweist, wobei der gegenseitige Abstand (b) der beiden Detektoren (23, 24) größer ist als die Länge (11) der ersten Markierung (14) und kleiner ist als die Länge (12, 13) der zweiten Markierung (15, 17) und die Detektoren (23, 24) jeweils bei Abtastung einer der Markierungen (14, 15, 17) ein Abtastsignal (A1, A2) generieren, und wobei
die Abtasteinheit (2) dazu ausgebildet ist, den Referenzmarkenimpuls (RI) zu erzeugen, wenn ausschließlich der erste Detektor (23) der beiden Detektoren (23, 24) ein Abtastsignal (A1) generiert, und das Schaltsignal (S1) zu erzeugen, wenn der erste Detektor (23) sowie der zweite Detektor (24) ein Abtastsignal (A1, A2) generieren.

2. Positionsmesseinrichtung nach Anspruch 1, wobei sich der erste Detektor (23) auf der Seite der beiden Detektoren (23, 24) befindet, auf der auch die erste Markierung (14) gegenüber der zweiten Markierung (15) angeordnet ist.

3. Positionsmesseinrichtung nach einem der vorhergehenden Ansprüche, wobei die mehreren Referenzmarken (12, 13) in der Markierungsspur (T1) angeordnet sind und zur Abtastung dieser Referenzmarken (12, 13) in der Abtasteinheit (2) ein Referenzmarkendetektor (22) zur Erzeugung von Referenzmarkensignalen (R) angeordnet ist.

4. Positionsmesseinrichtung nach Anspruch 3, wobei der Referenzmarkendetektor (22) zum ersten Detektor (23) in Messrichtung (X) in einem ersten Abstand (a) angeordnet ist und die erste Markierung (14) zu der zugeordneten Referenzmarke (12) in diesem ersten Abstand (a) angeordnet ist.

5. Positionsmesseinrichtung nach Anspruch 4, wobei der zweite Detektor (24) zum ersten Detektor (23) in Messrichtung (X) in einem zweiten Abstand (b) angeordnet ist, der vom ersten Abstand (a) abweicht.

6. Positionsmesseinrichtung nach einem der vorhergehenden Ansprüche, wobei die zweite Markierung (15, 17) an einer Grenzlage des Maßstabs (1) angeordnet ist und das Schaltsignal (S1) diese Grenzlage des Maßstabs (1) anzeigt.

7. Positionsmesseinrichtung nach einem der vorhergehenden Ansprüche, wobei der Maßstab (1) eine weitere Markierungsspur (T2) mit einer weiteren Markierung (16) aufweist und die Abtasteinheit (2) einen weiteren Detektor (25) zur Abtastung dieser weiteren Markierung (16) umfasst.

8. Positionsmesseinrichtung nach Anspruch 7, wobei die Abtasteinheit (2) dazu ausgebildet ist ein weiteres Schaltsignal (S2, S3) zu erzeugen, wenn der weitere Detektor (25) die weitere Markierung (16) abtastet.

9. Positionsmesseinrichtung nach einem der vorhergehenden Ansprüche, wobei die Detektoren (23, 24, 25) lichtempfindliche Detektoren sind und die Markierungsspur (T1, T2) des Maßstabs (1) reflektierend ist und die Markierungen (14, 15, 16, 17) lichtabsorbierend ausgebildet sind.

10. Positionsmesseinrichtung nach Anspruch 9, wobei die lichtabsorbierenden Markierungen (14, 15, 16, 17) auf den Maßstab (1) aufklebbare Streifen sind.

## Claims

1. Position measuring device having a scale (1) and a scanning unit (2) movable relative thereto in the measuring direction (X),
the scale (1) having an incremental graduation (11) and multiple reference marks (12, 13) spaced apart from one another in the measuring direction (X), it being possible for a reference mark pulse (RI) to be generated by scanning one of the reference marks (12);
the scale (1) having a marking track (T1) having a first marking (14), the first marking (14) being assigned to one of the reference marks (12);
in the marking track (T1), spaced apart in the measuring direction (X) from the first marking (14), there is arranged a second marking (15, 17), which is longer in the measuring direction (X) than the first marking (14), and a switching signal (S1) can be generated by scanning this second marking (15, 17),
**characterized in that**
the scanning unit (2) for scanning the marking track (T1) has a first detector (23) and a second detector (24) arranged spaced apart from the latter in the measuring direction (X), wherein the mutual spacing (b) of the two detectors (23, 24) is greater than the length (11) of the first marking (14) and smaller than the length (12, 13) of the second marking (15, 17), and the detectors (23, 24) each generate a scanning signal (A1, A2) when scanning one of the markings (14, 15, 17), and wherein
the scanning unit (2) is designed to generate the reference mark pulse (RI) only when the first detector (23) of the two detectors (23, 24) generates a scanning signal (A1), and to generate the switching signal (S1) when the first detector (23) and the second detector (24) generate a scanning signal (A1, A2).

2. Position measuring device according to Claim 1, wherein the first detector (23) is located on the side of the two detectors (23, 24) on which the first marking (14) is also arranged opposite the second marking (15).

3. Position measuring device according to one of the preceding claims, wherein the multiple reference marks (12, 13) are arranged in the marking track (T1) and, for scanning these reference marks (12, 13), a reference mark detector (22) is arranged in the scanning unit (2) to generate reference mark signals (R).

4. Position measuring device according to Claim 3, wherein the reference mark detector (22) is arranged at a first distance (a) from the first detector (23) in the measuring direction (X), and the first marking (14) is arranged at this first distance (a) from the associated reference mark (12).

5. Position measuring device according to Claim 4, wherein the second detector (24) is arranged at a second distance (b) from the first detector (23) in the measuring direction (X) which is different from the first distance (a).

6. Position measuring device according to one of the preceding claims, wherein the second marking (15, 17) is arranged at a boundary position of the scale (1), and the switching signal (S1) indicates this boundary position of the scale (1).

7. Position measuring device according to one of the preceding claims, wherein the scale (1) has a further marking track (T2) with a further marking (16), and the scanning unit (2) comprises a further detector (25) for scanning this further marking (16).

8. Position measuring device according to Claim 7, wherein the scanning unit (2) is designed to generate a further switching signal (S2, S3) when the further detector (25) scans the further marking (16).

9. Position measuring device according to one of the preceding claims, wherein the detectors (23, 24, 25) are light-sensitive detectors, and the marking track (T1, T2) of the scale (1) is reflective and the markings (14, 15, 16, 17) are designed to be light-absorbing.

10. Position measuring device according to Claim 9, wherein the light-absorbing markings (14, 15, 16, 17) are strips that can be adhesively bonded to the scale (1).

## Revendications

1. Dispositif de mesure de position comprenant une règle graduée (1) et une unité de palpage (2) mobile par rapport à celle-ci dans une direction de mesure (X),
la règle graduée (1) possédant une graduation de mesure incrémentale (11) ainsi que plusieurs repères de référence (12, 13) mutuellement espacés dans la direction de mesure (X), une impulsion de repère de référence (RI) pouvant être générée par palpage de l'un des repères de référence (12) ;
la règle graduée (1) possédant une piste de marquage (T1) pourvue d'un premier marquage (14), le premier marquage (14) étant associé à l'un des repères de référence (12) ;
un deuxième marquage (15, 17) étant disposé dans la piste de marquage (T1), espacé du premier marquage (14) dans la direction de mesure (X), lequel est plus long que le premier marquage (14) dans la direction de mesure (X) et un signal de commutation (S1) pouvant être généré par palpage de ce deuxième marquage (15, 17),
**caractérisé en ce que**
l'unité de palpage (2) possède, pour le palpage de la piste de marquage (T1), un premier détecteur (23) et un deuxième détecteur (24) espacé de celui-ci dans la direction de mesure (X), l'écart mutuel (b) entre les deux détecteurs (23, 24) étant supérieur à la longueur (I1) du premier marquage (14) et inférieur à la longueur (I2, 13) du deuxième marquage (15, 17) et les détecteurs (23, 24) générant respectivement un signal de palpage (A1, A2) lors du palpage de l'un des marquages (14, 15, 17), et
l'unité de palpage (2) étant configurée pour générer l'impulsion de repère de référence (RI) si exclusivement le premier détecteur (23) des deux détecteurs (23, 24) génère un signal de palpage (A1), et pour générer le signal de commutation (S1) lorsque le premier détecteur (23) ainsi que le deuxième détecteur (24) génèrent un signal de palpage (A1, A2).

2. Dispositif de mesure de position selon la revendication 1, le premier détecteur (23) se trouvant sur le côté des deux détecteurs (23, 24) sur lequel est également disposé le premier marquage (14) par rapport au deuxième marquage (15).

3. Dispositif de mesure de position selon l'une des revendications précédentes, les plusieurs repères de référence (12, 13) étant disposés dans la piste de marquage (T1) et un détecteur de repère de référence (22) destiné à générer des signaux de repère de référence (R) étant disposé dans l'unité de palpage (2) pour le palpage de ces repères de référence (12, 13).

4. Dispositif de mesure de position selon la revendication 3, le détecteur de repère de référence (22) étant disposé à un premier écart (a) du premier détecteur (23) dans la direction de mesure (X) et le premier marquage (14) étant disposé à ce premier écart (a) par rapport au repère de référence (12) associé.

5. Dispositif de mesure de position selon la revendication 4, le deuxième détecteur (24) étant disposé à un deuxième écart (b) du premier détecteur (23) dans la direction de mesure (X), lequel est différend du premier écart (a).

6. Dispositif de mesure de position selon l'une des revendications précédentes, le deuxième marquage (15, 17) étant disposé à une position limite de la règle graduée (1) et le signal de commutation (S1) indiquant cette position limite de la règle graduée (1).

7. Dispositif de mesure de position selon l'une des revendications précédentes, la règle graduée (1) possédant une piste de marquage supplémentaire (T2) pourvue d'un marquage supplémentaire (16) et l'unité de palpage (2) comprenant un détecteur supplémentaire (25) destiné à palper ce marquage supplémentaire (16).

8. Dispositif de mesure de position selon la revendication 7, l'unité de palpage (2) étant configurée pour générer un signal de commutation supplémentaire (S2, S3) lorsque le détecteur supplémentaire (25) palpe le marquage supplémentaire (16) .

9. Dispositif de mesure de position selon l'une des revendications précédentes, les détecteurs (23, 24, 25) étant des détecteurs photosensibles et la piste de marquage (T1, T2) de la règle graduée (1) étant réfléchissante et les marquages (14, 15, 16) étant configurés pour absorber la lumière.

10. Dispositif de mesure de position selon la revendication 9, les marquages (14, 15, 16, 17) absorbant la lumière étant des bandes pouvant être collées sur la règle graduée (1).
